# DEMANDE DE BREVET EUROPEEN

(11) **EP 3 382 849 A1**
(43) Date de publication de la demande: **03.10.2018**
(21) Numéro de dépôt: 18165098.7
(22) Date de dépôt: 29.03.2018
(51) Int. Cl.: H02J 7/02

(54) **RÉSEAU D'ALIMENTATION BASSE TENSION AMÉLIORÉ ET TRAIN ÉQUIPÉ D'UN TEL RÉSEAU D'ALIMENTATION**

(30) Priorité: 29.03.2017 FR 1752650
(71) Demandeur: ALSTOM Transport Technologies, 93400 Saint-Ouen (FR)
(72) Inventeur: BOLLENGIER, Christophe, 68780 SENTHEIM (FR)
(74) Mandataire: Lavoix

(57) **Abrégé**

Ce réseau (100) comporte : une ligne de distribution (124) s'étendant continument depuis une motrice de tête (11) jusqu'à une motrice de queue (18) à travers l'ensemble des voitures-passagers (12 à 17), et destinée à distribuer une puissance électrique à des équipements de traction (4, 6) et de conduite (2) dans chaque motrice et à des équipements de confort (8) dans chaque voiture-passager ; deux ensembles d'alimentation, constitués respectivement d'une batterie (121, 123) et d'un chargeur de batterie (122, 124) associé, les chargeurs de batterie étant identiques entre eux et les batteries étant identiques entre elles, une batterie étant connectée électriquement à la ligne de distribution via le chargeur de batterie associé de manière à porter la ligne de distribution (124) à un potentiel de 110 Volts.

## Description

L'invention a pour domaine celui des réseaux d'alimentation basse tension pour un train, le train résultant de l'attelage d'une pluralité de voitures-passagers entre une motrice de tête et une motrice de queue.

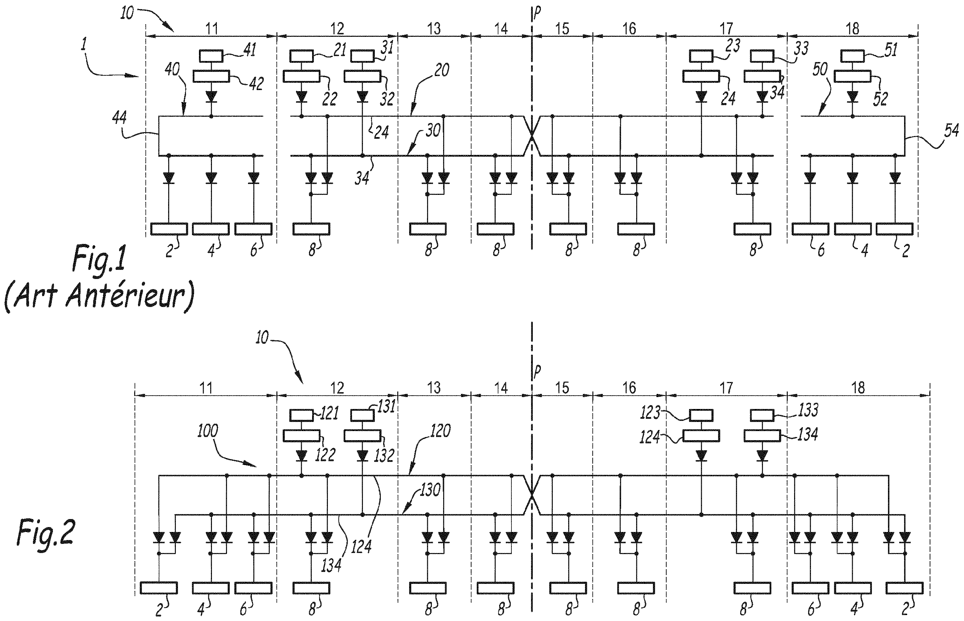

Pour un train à grande vitesse, on connaît un réseau d'alimentation basse tension du type illustré sur la figure 1.

Ce réseau d'alimentation basse tension 1 équipe un train 10 résultant de l'attelage d'une motrice de tête 11, d'une pluralité de voitures-passagers 12 à 17 et d'une motrice de queue 18.

Pour l'alimentation des équipements de la motrice de tête 11, à savoir des équipements de conduite 2 et des équipements de traction, primaire 4 et secondaire 6, le réseau 1 comporte un sous-réseau 40, qui comporte une ligne de distribution 44 à laquelle sont connectés électriquement les différents équipements 2 à 6 à alimenter en puissance électrique. Le sous-réseau 40 comporte également un ensemble d'alimentation constitué d'une batterie 41 et d'un chargeur de batterie 42. La batterie 41 est connectée à la ligne d'alimentation 44 par l'intermédiaire du chargeur 42. Le chargeur 42 est propre à recharger la batterie 41 à partir d'une source de puissance électrique, non représentée sur la figure 1, et par exemple constitué par le réseau d'alimentation haute tension du train. L'ensemble d'alimentation est propre à porter la ligne 44 à un potentiel de 72 Volts.

De manière identique, la motrice de queue 18 est équipée d'un sous-réseau 50 comportant une ligne de distribution 54 et un ensemble d'alimentation constitué d'une batterie 51 connectée électriquement à la ligne 54 via un chargeur de batterie 52.

Pour l'alimentation des équipements de chacune des voitures-passagers 12 à 17, à savoir des équipements de confort 8 (éclairage des voitures-passagers, air conditionné, etc.), le réseau 1 comporte un premier sous-réseau 20 et d'un second sous-réseau 30.

Le premier sous-réseau 20 comporte une ligne de distribution 24 qui s'étend à travers l'ensemble des voitures-passagers 12 à 17. Les équipements de confort 8 de chaque voiture-passager sont connectés électriquement à la ligne 24.

Deux ensembles d'alimentation, respectivement constitués d'une batterie, 21, 23, et d'un chargeur de batterie, 21, 22, sont connectés à la première ligne de distribution 24 de manière à la porter à un potentiel de 72 Volts.

De manière symétrique, le second sous-réseau 30 comporte une ligne de distribution 34 et deux ensembles d'alimentation, respectivement constitués d'une batterie, 31, 33, et d'un chargeur de batterie, 32, 34, pour porter la ligne au potentiel de 72 Volts.

Les équipements de confort 8 de chaque voiture-passager sont également connectés à la seconde ligne 34, de sorte que le second sous-réseau 30 vient en redondance du premier sous-réseau 20.

L'alimentation des équipements des motrices est indépendante de celle des équipements des voitures-passagers.

Les batteries 41 et 51, identiques entre elles, et les chargeurs 42 et 52, identiques entre eux, sont dédiés à l'alimentation des équipements de pilotage 2 et de traction 4 et 6.

Les batteries 21, 31, 23 et 33, identiques entre elles, et les chargeurs 22, 32, 24 et 34, identiques entre eux, sont dédiés à l'alimentation des équipements de confort 8. Ces composants d'alimentation diffèrent donc de de ceux des sous-réseaux 40 et 50, notamment dans leurs spécifications, leur nombre de cellules, etc.

Par ailleurs, les réseaux motrices et passagers sont séparés pour des raisons historiques de mobilité de la motrice seule, ce qui ne fait plus sens pour l'exploitation actuelle des trains grande vitesse, pour lesquels les rames sont insécables.

Les batteries utilisées sont du type nickel cadmium.

Il s'avère qu'un tel réseau d'alimentation, composé de différents sous-réseaux isolés les uns des autres, équipé de batteries différentes et de chargeurs différents, et utilisant des batteries nickel cadmium reste complexe, d'un coût de réalisation élevé, et d'une maintenance délicate et donc chère.

En particulier, la maintenance des batteries nickel cadmium nécessite la vérification régulière du niveau de l'électrolyte utilisé. Ces batteries ont une durée de vie relativement courte et il est nécessaire de prendre des précautions particulièrement drastiques pour les recycler.

L'invention a donc pour but de résoudre ces problèmes.

L'invention a donc pour objet un réseau d'alimentation basse tension pour un train, ledit train résultant de l'attelage d'une pluralité de voitures-passagers entre une motrice de tête et une motrice de queue, caractérisé en ce qu'il comporte : une ligne de distribution s'étendant continûment depuis la motrice de tête jusqu'à la motrice de queue à travers l'ensemble des voitures-passagers, et destinée à distribuer une puissance électrique à des équipements de traction et de conduite dans chaque motrice et à des équipements de confort dans chaque voiture-passager ; deux ensembles d'alimentation, constitués respectivement d'une batterie et d'un chargeur de batterie associé, les chargeurs de batterie étant identiques entre eux et les batteries étant identiques entre elles, une batterie étant connectée électriquement à la ligne de distribution via le chargeur de batterie associé de manière à porter la ligne de distribution à un potentiel de 110 Volts.

Suivant des modes particuliers de réalisation, le réseau comporte une ou plusieurs des caractéristiques suivantes, prises isolément ou selon toutes les combinaisons techniquement possibles :
- la ligne de distribution étant une première ligne de distribution, les deux ensembles d'alimentation étant des premiers ensembles d'alimentation, le réseau d'alimentation basse tension est redondant et comporte : une seconde ligne de distribution s'étendant continûment depuis la motrice de tête jusqu'à la motrice de queue à travers l'ensemble des voitures-passagers ; deux seconds ensemble d'alimentation, constitués respectivement d'une batterie et d'un chargeur de batterie associé, une batterie étant connectée électriquement à la seconde ligne de distribution via le chargeur de batterie associé de manière à porter la seconde ligne de distribution à un potentiel de 110 Volts, les équipements de traction et de conduite de chaque motrice et les équipements de confort de chaque voiture-passager étant connectés à la première ligne de distribution et à la seconde ligne de distribution, les chargeurs de batterie étant identiques entre eux et les batteries étant identiques entre elles.
- chaque batterie est du type batterie au plomb.
- chaque chargeur est propre à maintenir la ligne de distribution à laquelle il est électriquement connecté au potentiel de 110 Volts, quelle que soit la puissance requise par un équipement connecté à ladite ligne de distribution au cours de son fonctionnement.
- une batterie et le chargeur de batterie associé d'un ensemble d'alimentation sont connectés à proximité d'une extrémité de la ligne de distribution.
- une batterie et le chargeur de batterie associé sont embarqués à bord d'une voiture passager attelée à une motrice parmi la motrice de tête et la motrice de queue.
- la ligne de distribution est constituée d'au moins un câble dont un diamètre est adapté au potentiel de 110 Volts auquel est portée ladite ligne de distribution et d'une puissance requise par les équipements connectés à ladite ligne de distribution.

L'invention a également pour objet un train comportant un réseau d'alimentation basse tension, caractérisé en ce que ce réseau est conforme au réseau présenté ci-dessus.

De préférence, le train est un train grande vitesse.

De préférence encore, le train résulte de l'attelage d'une pluralité de voitures-passagers entre une motrice de tête et une motrice de queue.

L'invention et ses avantages seront mieux compris à la lecture de la description détaillée qui va suivre, d'un mode de réalisation particulier présenté uniquement à titre d'exemple illustratif et non limitatif en se référant aux dessins annexés sur lesquels :
- la figure 1 représente schématiquement un réseau d'alimentation d'un train à grande vitesse selon l'état de la technique ; et,
- la figure 2 représente schématiquement un mode de réalisation préféré d'un réseau d'alimentation selon la présente invention.

La figure 2 représente un réseau d'alimentation basse tension 100 pour un train 10.

Le train 10 est composé de l'attelage d'une motrice de tête 11, d'une succession de voitures-passagers, référencées 12 à 17, et d'une motrice de queue 18. De préférence, pour un train grande vitesse, le nombre de voitures-passagers est entre six et douze voitures, de préférence entre huit et dix.

Le réseau 100, symétrique par rapport à un plan P médian du train 10, comporte un premier sous-réseau 120 et un second sous-réseau 130.

Les sous-réseaux 120 et 130 sont identiques entre eux.

Le premier sous-réseau 120 peut se substituer au second sous-réseau 130 de sorte que l'architecture du réseau 100 est redondante, pour offrir une disponibilité accrue, en cas de survenue d'une défaillance de l'un ou l'autre des sous-réseaux 120, 130.

Le premier sous-réseau 120 comporte une première ligne de distribution 124 qui s'étend continument d'un bout à l'autre du train 10, c'est-à-dire depuis la motrice de tête 11, jusqu'à la motrice de queue 18, à travers chacune des voitures-passagers 12 à 17.

Le premier sous-réseau 120 comporte une paire de premiers ensembles d'alimentation :
- Un premier ensemble d'alimentation, situé dans la voiture-passager 12 attelée à la motrice de tête 11, est composé d'une première batterie 121 et d'un premier chargeur de batterie 122 ;
- Un second ensemble d'alimentation, situé dans la voiture-passager 17 attelée à la motrice de queue 18, est composé d'une seconde batterie 123 et d'un second chargeur de batterie 124.

Le second sous-réseau 130 comporte une ligne de distribution 134 s'étendant continûment d'un bout à l'autre du train 10 et une paire de seconds ensembles d'alimentation :
- Un premier ensemble d'alimentation, situé dans la voiture-passager 12 attelée à la motrice de tête 11, est composé d'une première batterie 131 et d'un premier chargeur de batterie 132 ;
- Un second ensemble d'alimentation, situé dans la voiture-passager 17 attelée à la motrice de queue 18, est composé d'une seconde batterie 133 et d'un second chargeur de batterie 134.

Les différentes batteries 121, 131, 123, 133 sont identiques entre elles.

Il s'agit de préférence de batteries du type batterie au plomb (« lead acid » en anglais). Une telle batterie comporte une pluralité d'accumulateurs au plomb-acide sulfurique raccordés en série. De préférence, chaque batterie comporte un nombre d'accumulateurs réduit par rapport à celui de l'état de la technique. Neuf cellules sont ainsi nécessaires pour une batterie du réseau 100 alors qu'il en fallait environ quatre-vingt pour une batterie du réseau 60 de la figure 1.

Une batterie au plomb présente de nombreux avantages par rapport à une batterie nickel cadmium : Elle a un coût d'acquisition réduit ; Elle présente une maintenance réduite, notamment puisqu'il n'est pas nécessaire de surveiller le niveau d'un électrolyte au cours de l'utilisation de la batterie ; Elle présente également un cycle de vie bien meilleur ; et elle est entièrement recyclable.

Les batteries 121, 131, 123, 133 permettent de porter les première et seconde lignes de distribution, 124 et 134, au potentiel de 110 Volts.

Le fait de fonctionner à une tension de 110 Volt, plus élevée que les 72 Volts de l'état de la technique, permet, à puissance égale des équipements connectés, d'abaisser l'intensité des courants circulant dans les lignes de distribution 124, 134. Par conséquent, le ou les câbles utilisés pour la réalisation des première et seconde lignes de distribution 124, 134, présentent une section réduite par rapport à ceux utilisés pour les lignes 44, 24, 34 ou 54 de la figure 1. Si les câbles électriques à utiliser peuvent avoir des diamètres plus réduits, ils sont par conséquent moins coûteux que ceux utilisés dans l'état de la technique.

Les chargeurs 122, 132, 134, 124 sont identiques entre eux. Chaque chargeur est connecté à une source (non représentée sur les dessins), telle que le réseau d'alimentation haute tension du train 10, de manière à pouvoir, dans un mode de fonctionnement en recharge, recharger la batterie à laquelle il est associé.

Chaque chargeur permet également, dans un mode de fonctionnement nominal, de stabiliser la tension délivrée par la batterie à laquelle il est associé pour maintenir la tension à 110 Volts sur la ligne de distribution à laquelle il est connecté, et ceci quelle que soit la puissance demandée par les différents équipements connectés à cette ligne de distribution au cours de leur fonctionnement.

L'ensemble des besoins basse tension du train 10 sont fournis par le réseau 100.

Ainsi le train grande vitesse 10 est équipé d'un seul réseau d'alimentation.

Si ce réseau adopte une architecture redondante, comme représenté à la figure 2, le train 10 est équipé de deux sous-réseaux d'alimentation disposés en parallèle l'un de l'autre sur toute la longueur du train.

Tous les équipements du train, aussi bien des équipements des motrices de tête et de queue (équipements de conduite 2, équipement primaire de traction 4, équipement secondaire de traction 6) que des équipements des voitures-passagers (équipements de confort 8), sont connectés d'une part à la première ligne de distribution 124 et d'autre part à la second ligne de distribution 134.

Les équipements placés dans les motrices sont alimentés par le même réseau que les équipements placés dans les voitures-passagers.

Il est en effet possible de connecter directement les équipements servant à la propulsion du train et à la conduite du train sur le réseau d'alimentation des équipements de confort, car les batteries utilisées sont beaucoup plus fiables que celles de l'état de la technique et la redondance du réseau d'alimentation offre une disponibilité de la tension basse tension au moins équivalente à celle de l'état de la technique.

De plus, le niveau de la tension sur ce réseau étant plus élevé que dans l'état de la technique, les courants et surtout les variations de courant sont réduites. Il n'est donc pas nécessaire de séparer l'alimentation des équipements des motrices, qui sont des équipements critiques, des équipements des voitures-passagers, qui sont des équipements non-critiques. Une fois encore, ceci est dû à la fiabilité des batteries utilisées, au fait qu'elles soient redondées, de sorte que la probabilité de défaillance par court-circuit est négligeable.

Ainsi, le nombre d'ensemble d'alimentation est réduit par rapport à l'état de la technique. Le réseau 100 comporte, dans l'architecture redondante considérée ici, quatre ensembles d'alimentation, contre six, dans le mode de réalisation de la figure 1, ou même huit, lorsque les réseaux d'alimentation des motrices de queue et de tête, 40 et 50, sont également redondés.

A la réduction du nombre d'ensemble d'alimentation, le réseau 100 ajoute l'avantage d'utiliser des ensembles d'alimentation tous identiques entre eux. Les coûts d'achat, d'installation et de maintenance sont donc réduits par rapport à l'état de la technique.

Les différentes directions d'amélioration et de simplification du réseau d'alimentation selon l'invention permettent une économie de l'ordre de 30 000 Euros par train par rapport à la solution de l'état de la technique illustrée par la figure 1.

## Revendications

1. Réseau d'alimentation basse tension (100) pour un train (10), ledit train résultant de l'attelage d'une pluralité de voitures-passagers (12 à 17) entre une motrice de tête (11) et une motrice de queue (18), **caractérisé en ce qu'**il comporte :
- une ligne de distribution (124) s'étendant continument depuis la motrice de tête jusqu'à la motrice de queue à travers l'ensemble des voitures-passagers, et destinée à distribuer une puissance électrique à des équipements de traction (4, 6) et de conduite (2) dans chaque motrice et à des équipements de confort (8) dans chaque voiture-passager ;
- deux ensembles d'alimentation, constitués respectivement d'une batterie (121, 123) et d'un chargeur de batterie (122, 124) associé, les chargeurs de batterie étant identiques entre eux et les batteries étant identiques entre elles, chaque batterie étant connectée électriquement à la ligne de distribution via le chargeur de batterie associé de manière à porter la ligne de distribution (124) à un potentiel de 110 Volts.

2. Réseau d'alimentation basse tension (100) selon la revendication 1, **caractérisé en ce que**, la ligne de distribution étant une première ligne de distribution (124), les deux ensembles d'alimentation étant des premiers ensembles d'alimentation, le réseau d'alimentation basse tension est redondant et comporte :
- une seconde ligne de distribution (134) s'étendant continument depuis la motrice de tête jusqu'à la motrice de queue à travers l'ensemble des voitures-passagers ;
- deux seconds ensemble d'alimentation, constitués respectivement d'une batterie (131, 132) et d'un chargeur de batterie (132, 134) associé, chaque batterie étant connectée électriquement à la seconde ligne de distribution (134) via le chargeur de batterie associé de manière à porter la seconde ligne de distribution (134) à un potentiel de 110 Volts, les équipements de traction (4, 6) et de conduite (2) de chaque motrice et les équipements de confort (8) de chaque voiture-passager étant connectés à la première ligne de distribution (124) et à la seconde ligne de distribution (134), les chargeurs de batterie étant identiques entre eux et les batteries étant identiques entre elles.

3. Réseau d'alimentation basse tension (100) selon la revendication 1 ou la revendication 2, **caractérisé en ce que** chaque batterie (121, 123 ; 131, 133) est du type batterie au plomb.

4. Réseau d'alimentation basse tension selon l'une quelconque des revendications 1 à 3, **caractérisé en ce que** chaque chargeur (122, 124 ; 132, 134) est propre à maintenir la ligne de distribution (124, 134) à laquelle il est électriquement connecté au potentiel de 110 Volts, quelle que soit la puissance requise par un équipement (2 à 8) connecté à ladite ligne de distribution au cours de son fonctionnement.

5. Réseau d'alimentation basse tension (100) selon l'une quelconque des revendications 1 à 4, dans lequel la batterie et le chargeur de batterie associé d'un ensemble d'alimentation sont connectés à proximité d'une extrémité de la ligne de distribution (124, 134).

6. Réseau d'alimentation basse tension (100) selon l'une quelconque des revendications 1 à 5, **caractérisé en ce qu'**une batterie et le chargeur de batterie associé sont embarqués à bord d'une voiture passager (12, 17) attelée à une motrice parmi la motrice de tête (11) et la motrice de queue (18).

7. Réseau d'alimentation basse tension (100) selon l'une quelconque des revendications 1 à 6, **caractérisé en ce que** la ligne de distribution (124, 134) comprend au moins un câble dont un diamètre est adapté au potentiel de 110 Volts auquel est portée ladite ligne de distribution et à une puissance requise par les équipements (2 à 8) connectés à ladite ligne de distribution.

8. Train (10) comportant un réseau d'alimentation basse tension, **caractérisé en ce que** ledit réseau est un réseau d'alimentation basse tension (100) conforme à l'une quelconque des revendications 1 à 7.

9. Train (10) selon la revendication 8, **caractérisé en ce qu'**il s'agit d'un train grande vitesse.

10. Train (10) selon la revendication 8 ou la revendication 9, **caractérisé en ce qu'**il résulte de l'attelage d'une pluralité de voitures-passagers (12 à 17) entre une motrice de tête (11) et une motrice de queue (18).
